# EUROPÄISCHE PATENTSCHRIFT

(11) **EP 2 986 102 B1**
(45) Veröffentlichungstag und Bekanntmachung des Hinweises auf die Patenterteilung: **17.02.2021**
(21) Anmeldenummer: 14723734.1
(22) Anmeldetag: 17.04.2014
(51) Int. Cl.: A01F 25/20

(54) **VORRICHTUNG ZUR ENTNAHME VON SILAGE**
DEVICE FOR EXTRACTING SILAGE
DISPOSITIF DE PRÉLÈVEMENT DE FOURRAGE ENSILÉ

(30) Priorität: 19.04.2013 DE 102013103981
(43) Veröffentlichungstag der Anmeldung: 24.02.2016
(73) Patentinhaber: Altenbuchner, Josef, 5122 Hochburg-Ach (AT)
(72) Erfinder: Altenbuchner, Josef, 5122 Hochburg-Ach (AT)
(74) Vertreter: Puschmann Borchert Kaiser Klettner Patentanwälte Partnerschaft mbB
(86) Internationale Anmeldenummer: PCT/EP2014/057924
(87) Internationale Veröffentlichungsnummer: WO 2014/170445

(56) Entgegenhaltungen:
- WO-A1-2010/031145
- DE-A1- 1 817 744
- DE-A1- 2 502 422
- US-A- 6 109 552

## Beschreibung

Die Erfindung betrifft eine Vorrichtung zur Entnahme von Silage gemäß der im Oberbegriff des Patentanspruches 1 angegebenen Art.

Es sind sowohl gezogene als auch selbstfahrende Vorrichtungen zur Entnahme von Silage in vielerlei Ausführungsformen bekannt. In der DE 10 2011 053 437 wird ein Gerät offenbart, das schwenkbar an einem Futtermischwagen angebracht ist und am äußeren Ende seines mit einem Förderband ausgestatteten Schwenkarms eine Trennvorrichtung trägt, welches stirnseitig Futter aufnimmt und dieses einem Förderband zur Weiterleitung in einen Mischbehälter übergibt. Dadurch ist zwar bereits ein hoher Grad von Automatisierung des Entnahmevorgangs im Vergleich zu früher bekannten Lösungen erreicht, aber grundsätzlich ist immer eine Bedienung des Geräts durch wenigstens eine Person erforderlich. Denn während es bereits möglich ist, die Entnahme von Silage und ihre Beförderung in einen vorgesehenen Behälter weitestgehend zu automatisieren, muss der Vorschub der Entnahmevorrichtung bisher von einer Person gesteuert werden. Dies ist von Nachteil, da die Person während der gesamten Dauer des Entnahmevorgangs nicht für andere wichtige Tätigkeiten zur Verfügung steht.

Aus der DE 25 02 422 A1 ist eine Vorrichtung zur Herstellung von Trennschnitten in Fahrsilos bekannt, bei dem ein ein Fahrsilo überbrückendes Traggestell vorgesehen ist, das eine Vorratsrolle für Folie aufweist, die zur Abdeckung des Fahrsilos verwendet wird. Diese Vorratsrolle erleichtert dem Bediener zwar insbesondere das Abdecken und Aufrollen der Folie während der Entnahme der Silage. Allerdings sind die beiden Arbeitsschritte Entnahme der Silage und Aufrollen der Folie entsprechend dieser vorgeschlagenen Lösung schwer zu automatisieren und werden stufenweise und unabhängig voneinander durchgeführt. Dies ist von Nachteil, da zumindest eine Person während der gesamten Dauer des Entnahmevorgangs mit der Bedienung der Vorrichtung beschäftigt ist und zudem die Gefahr einer Beschädigung der Folie besteht, wenn die beiden Arbeitsschritte Entnahme der Silage und Aufrollen der Folie nicht sorgsam aufeinander abgestimmt werden.

Die US 6 109 552 A offenbart eine Vorrichtung, bei die die Rolle zur Aufnahme der Silofolie so angeordnet werden kann, dass sich die Silofolie über die Entnahmeöffnung und über das Entnahmemittel erstreckt.

Aus der WO 2010/031145 A1 wird eine gattungsgemäße Vorrichtung zur Entnahme von Silage aus einem bodenlagernden Silo offenbart.

Es ist Aufgabe der vorliegenden Erfindung, eine Vorrichtung zu schaffen, die selbsttätig Silage entnimmt und dabei nicht während des gesamten Entnahmevorgangs von einer Person bedient und überwacht werden muss, dabei soll das Silo nach dem Entnahmevorgang wieder sicher verschlossen werden können.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass alle Elemente, die zur vereinfachten Entnahme von Silage aus einem bodenlagernden Silo, fortan als "Silo" bezeichnet, erforderlich sind, auf einem Rahmen angeordnet und auf diesem relativ zum Silo bewegt werden können und über einen Klappmechanismus das Silo nach Entnahme einfach verschlossen werden kann.

Nach der Erfindung sind ein gewähltes Mittel zur Entnahme der Silage und eine Rolle zur Aufnahme der nach der Entnahme der Silage nicht mehr benötigten Silofolie, fortan als "Folie" bezeichnet, auf einem beweglichen Rahmen angebracht. Hierbei ist die Rolle so angeordnet, dass sich die Folie über die Entnahmeöffnung und über das Entnahmemittel erstreckt. Dadurch ist der gesamte Entnahmebereich gegen Wettereinflüsse geschützt. Zudem weist der Rahmen eine Halte- und Antriebsvorrichtung für die Rolle auf und ist relativ zum Silo beweglich ausgebildet. Der Rahmen steht außerdem mit einem Mittel zur Erzeugung der Vortriebsbewegung in Wirkverbindung. Die erfindungsgemäße Ausgestaltung erweist sich als besonders vorteilhaft, da aufgrund der automatisierten Nachführung des Rahmens ein manuelles Nachführen des Entnahmemittels nicht mehr erforderlich ist und da auch das manuelle Beseitigen der Folie entfällt. Somit wird bei jedem Entnahmezyklus körperliche Arbeit eingespart.

Der Antrieb der Rolle wird nach der Erfindung auch als Mittel zum Vortrieb des Rahmens verwendet wird. Durch das Aufrollen der Folie auf die Rolle entsteht eine Zugkraft, aufgrund derer der Rahmen in Richtung des Silos verschoben wird. Somit kann die Entnahme von Silage mit nur einem Antriebsmittel erfolgen.

Der Rahmen besteht dabei aus zwei parallel zueinander ausgerichteten Schenkeln, die durch mindestens eine Querstrebe miteinander verbunden sind, und ist auf Bewegungsmitteln so gelagert, dass der Vorschub möglichst wenig Kraftaufwand erfordert. An den der Entnahmeöffnung des Silos zugewandten Enden umfassen die beiden parallelen Schenkel das Silo. Durch diese Anordnung wird eine größtmögliche Stabilität der Rahmenkonstruktion bei leichter Beweglichkeit erreicht.

Die Bewegungsmittel liegen dabei auf derselben Ebene liegen wie das Silo. So kann die Vorrichtung Silage aus einem an beliebiger Stelle angelegten bodenlagernden Silo entnehmen, da sie auf dem Boden verfahrbar ist, auf dem das Silo lagert, und daher auf eine aufwendige ortsfeste Tragekonstruktion, insbesondere Seitenwände, verzichtet werden kann.

An den zwei parallelen Schenkeln ist ein Bügel angeordnet, der das Silo oben umfasst. An diesem Bügel sind mindestens zwei Klemmbügel vorgesehen, die um die Längsachse des Bügels kippbar sind. Mit Hilfe dieser Klemmbügel, die zweckmäßigerweise an den beiden Seitenbereichen des Silos angeordnet sind, wird das Silo während der Entnahme stabilisiert, so dass der Entnahmevorgang einfacher abläuft.

Zudem ist oberhalb des Silos am Bügel eine Klappvorrichtung, beispielsweise in Form eines Gitters oder einer Platte, angebracht, die vor die Entnahmeöffnung herunterklappbar ist. Damit wird nach Beendigung der Silageentnahme die Folie auf die Entnahmeöffnung gepresst und diese wieder abgedichtet. Dies hat den Vorteil, dass das Silo einfach und schnell wieder verschlossen wird und dass dadurch der Zeitraum, währenddessen die Silage in Berührung mit Luft kommt, erheblich kürzer ist.

Während zum Beispiel auch eine Lagerung des Rahmens auf Kufen oder auf einer Schienenkonstruktion denkbar ist, haben sich Rollen oder Räder als besonders vorteilhaft erwiesen, da sie belastbare, flexible und vergleichsweise kostengünstige Bewegungsmittel sind.

Weiterhin ist es von Vorteil, wenn an jedem Klemmbügel jeweils ein zusätzlicher Druckschenkel angebracht ist, der dem jeweiligen Klemmbügel in Silolängsrichtung einander gegenüberliegend angeordnet ist. Nach einem Entnahmezyklus, also nach der Entnahme einer vertikalen Schicht der Silage, wird beim Lösen des Klemmbügels aus der Klemmposition durch die Drehung um die Achse des Bügels der Druckschenkel gegen die Folie gedrückt. Dies hat den Vorteil, dass an der Folie innen anliegende Silage gelöst und in Richtung der Mitte des bodenlagernden Silos befördert wird, wodurch die Gefahr einer Beschädigung der Folie durch das Entnahmemittel erheblich verringert wird.

Um die Entnahme weiter zu vereinfachen, ist an den parallelen Schenkeln des Rahmens beidseitig eine Spannvorrichtung angebracht, die das Silo vertikal und oben umfasst. Mit Hilfe dieser Spannvorrichtung wird die Folie zu Beginn eines Entnahmezyklus kurzzeitig nach unten gedrückt und dadurch im oberen Bereich des Silos befindliche Silage gelöst und nach unten befördert, wodurch die Entnahme der Silage einfacher und die Gefahr einer Beschädigung der Folie durch das Entnahmemittel erheblich geringer ist.

Die Spannvorrichtung kann zum Beispiel als flexibler Metallbügel oder als Stahlgurt ausgebildet sein. Insbesondere ist jedoch die Verwendung von Seilen oder Schläuchen zweckmäßig, da diese Ausbildung kostengünstig ist und das Risiko einer Beschädigung niedrig ist.

In einer verbesserten Ausführungsform dieser Erfindung ist auf der Unterseite der Klappvorrichtung ein verformbares Polster angebracht. Durch die Elastizität des Polsters lässt sich die Folie genauer auf die Silage aufpressen und dadurch das Silo besser abdichten.

Besonders zweckdienlich ist eine elektrisch oder hydraulisch angetriebene Klappvorrichtung, da dadurch wiederum körperliche Arbeit eingespart wird.

Gemäß einem Aspekt der Erfindung wird die Folie gefaltet, bevor sie von der Rolle aufgenommen wird. Dazu ist an beiden Schenkeln des Rahmens jeweils ein Mittel zur Führung der Folie vorgesehen, damit sie auch in dem Bereich, in dem die Silage bereits entnommen wurde, in einer stabilen Bahn verläuft. Ferner ist jeweils zwischen dem Mittel zur Führung der Folie und der Rolle ein Mittel zur Faltung der Folie vorgesehen. Durch die Faltung der Folie ist es möglich, die Länge der Rolle wesentlich kürzer zu bemessen als die Breite der Folie, was einen platzsparenden Effekt hat.

Eine weitere Verbesserung des Entnahmevorgangs wird dadurch erreicht, dass eine Steuereinheit vorgesehen ist, die mit dem Entnahmemittel, der Spannvorrichtung und den Klemmbügeln sowie der Rolle in Wirkverbindung steht. Dadurch wird der Grad der Automatisierung der vorliegenden Erfindung deutlich erhöht, da die Klemm- und Spannwirkungen der jeweiligen Vorrichtungen mit den Entnahmezyklen des Entnahmemittels abstimmbar sind.

Insbesondere ist es vorteilhaft, wenn Sensoren zur Bestimmung der Position des Entnahmemittels und/oder zur Bestimmung der horizontalen und vertikalen Ausdehnung des bodenlagernden Silos vorgesehen sind und die Steuereinheit durch eine Regeleinheit ersetzt wird, die mit den Sensoren, dem Entnahmemittel, der Spannvorrichtung und den Klemmbügeln in Wirkverbindung steht. Durch diese Ausführung ist eine noch genauere Abstimmung zwischen Klemm- und Spannvorrichtung einerseits und Entnahmemittel und der Rolle andererseits möglich.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:

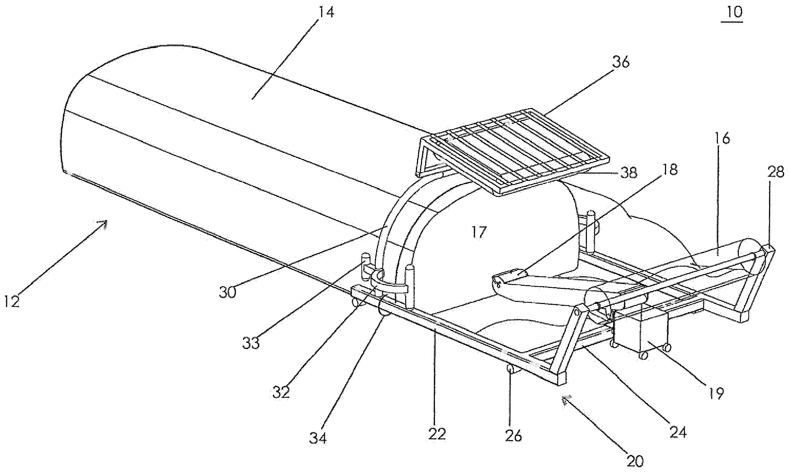

- Fig. 1: eine schematische perspektivische Darstellung einer Vorrichtung zur Entnahme von Silage nach der Erfindung.

Fig. 1 zeigt schematisch in einer perspektivischen Darstellung eine insgesamt mit der Bezugsziffer 10 bezeichnete Vorrichtung zur Entnahme von Silage aus einem bodenlagernden Silo 12 mit einer Entnahmeöffnung 17. Die Vorrichtung ist auf einem Rahmen 20 bewegbar gelagert, der zwei parallel zueinander ausgerichteten Schenkel 22 und eine Strebe 24 zur Verbindung der Schenkel 22 aufweist. Eine Fräse 18, die die Silage über einen Förderschacht in einen Behälter 19 abgibt, bildet das Entnahmemittel. Die Fräse 18 ist auf der Strebe 24 des Rahmens 20 seitlich verschiebbar gelagert. Vier Rollen 26 dienen als Bewegungsmittel für den Rahmen 20.

Auf dem Rahmen 20 ist eine Haltevorrichtung 28 für eine Rolle 16 für die Aufnahme von Silofolie 14 angebracht, die zwei annähernd vertikal auf dem Rahmen 20 befestigte Träger und eine Querstange, auf welche die Rolle 16 aufgebracht ist, umfasst. Aus Gründen der Übersichtlichkeit sind die Silofolie 14 und der in die Haltevorrichtung 28 integrierte Antrieb für die Rolle 16 in Fig. 1 nicht dargestellt. Die Rolle 16 ist auf der von der Entnahmeöffnung 17 entfernten Seite des Rahmens 20 angeordnet, so dass sich die Silofolie 14 über die Entnahmeöffnung 17 und über die Fräse 18 erstreckt und diese vor Umwelteinflüssen schützt. Ferner sind aus Fig. 1 ein als Spannvorrichtung dienendes Seil 34 und ein Bügel 30 ersichtlich, die beide jeweils in dem Bereich der Schenkel 22 angebracht sind, mit dem der Rahmen 20 das bodenlagernde Silo 12 umfasst. Auf beiden Seiten des bodenlagernden Silos 12 ist im unteren Bereich des Bügels 30 jeweils ein Klemmbügel 32 mit einem ihm relativ zum Bügel 30, um den er kippbar ist, gegenüberliegenden Druckschenkel 33 angebracht. Wie weiter aus Fig. 1 erkennbar ist, ist am Bügel 30 oberhalb des bodenlagernden Silos 12 ein Gitter 36 mit einem verformbaren Polster 38 an der Unterseite angebracht.

Die Funktion der Vorrichtung 10 wird nachfolgend kurz erläutert:
Die Silofolie 14 wird über Führungsschienen und Faltrollen, die aus Gründen der Übersichtlichkeit nicht in der Fig. 1 dargestellt sind, zur Rolle 16 geführt und dort festgespannt. Zur Stabilisierung des bodenlagernden Silos 12 werden dann die Klemmbügel 32 eng an das bodenlagernde Silo 12 gedrückt. Danach werden die Entnahmezeiten der Fräse 18 eingestellt und die Fräse 18 in Betrieb genommen. Beim Abfräsen und Abfahren des Haufens wird durch am Fräskopf angebrachte Tastbügel dafür gesorgt, dass die Fräse 18 sich der Silofolie 14 nicht zu sehr nähert und diese beschädigt. Nach Abfräsen einer zuvor eingestellten Menge der Silage stellt sich die Fräse 18 ab. Durch Anziehen am Seil 34 wird von oben Druck auf die Silofolie 14 ausgeübt, durch Drehen der Klemmbügel 32 um den Bügel 30, wodurch die Druckschenkel 33 auf die Silofolie 14 gepresst werden, wird von der Entnahmeöffnung 17 aus betrachtet von rechts und links Druck auf die Silofolie 14 ausgeübt. Durch diesen Druck auf die Silofolie 14 löst sich in der Nähe der Silofolie 14 lagernde und insbesondere an der Silofolie 14 anhaftende Silage und wird, vertikal betrachtet, in Richtung Mitte befördert, wo sie im nächsten Fräszyklus leichter und ohne Gefahr der Beschädigung von der Fräse 18 aufgenommen wird. Schließlich wird der Antrieb der Rolle 16 in Betrieb genommen und durch das Aufrollen der Silofolie 14 die gesamte Vorrichtung 10 um eine zuvor eingestellte Entfernung in Richtung des bodenlagernden Silos 12 verschoben. Danach stellt sich die Fräse 18 wieder an, und ein neuer Fräszyklus beginnt. Sobald der letzte Fräszyklus eines Entnahmevorgangs beendet ist, wird das Gitter 36 heruntergeklappt und das bodenlagernde Silo 12 wieder mit der Silofolie 14 verschlossen. Hierzu wird die Rolle 16 kurzzeitig vom Antrieb entkoppelt, so dass keine Zugspannung mehr anliegt und ein Abrollen der zum Verschließen des Silos 12 erforderlichen Folie 14 möglich ist.

### Bezugszeichenliste

- 10: Vorrichtung zur Entnahme von Silage
- 12: bodenlagerndes Silo
- 14: Silofolie
- 16: Rolle
- 17: Entnahmeöffnung
- 18: Entnahmemittel
- 19: Behälter
- 20: Rahmen
- 22: Schenkel
- 24: Strebe
- 26: Bewegungsmittel
- 28: Halte- und Antriebsvorrichtung
- 30: Bügel
- 32: Klemmbügel
- 33: Druckschenkel
- 34: Spannvorrichtung
- 36: Klappvorrichtung
- 38: Polster
- 40: Führungsmittel
- 41: Faltungsmittel

## Patentansprüche

1. Vorrichtung zur Entnahme von Silage aus einem bodenlagernden Silo (12), welches mit einer Silofolie (14) abgedeckt ist, umfassend
eine Rolle (16) zur Aufnahme der Silofolie (14);
Entnahmemittel (18) zur Entnahme der Silage aus einer Entnahmeöffnung (17) des Silos (12); wobei die Rolle (16) und das Entnahmemittel (18) auf einem Rahmen (20) gelagert sind, wobei die Rolle (16) so angeordnet ist, dass sich die Silofolie (14) über die Entnahmeöffnung (17) und über das Entnahmemittel (18) erstreckt, und wobei der Rahmen (20) eine Halte- und Antriebsvorrichtung (28) für die Rolle (16) aufweist und relativ zum Silo beweglich ausgebildet ist, und der Rahmen (20) mit einem Mittel zur Erzeugung eines Vortriebs in Silolängsrichtung in Wirkverbindung steht, wobei
der Rahmen (20) zwei parallel zueinander ausgerichtete Schenkel (22) sowie eine die beiden Schenkel (22) miteinander verbindende Strebe (24) aufweist, wobei die beiden Schenkel (22) das Silo (12) im Bereich der Entnahmeöffnung (17) bereichsweise umfassen und wobei an den Schenkeln (22) und/oder der Strebe (24) Bewegungsmittel (26) angebracht sind, über die der Rahmen (20) mit dem Boden in Kontakt steht, wobei
an den Schenkeln (22) ein das Silo (12) oben umfassender Bügel (30) angeordnet ist, wobei an dem Bügel (30) beidseitig Klemmbügel (32) angeordnet sind, die um die Längsachse des Bügels (30) kippbar sind, **dadurch gekennzeichnet, dass**
an dem Bügel (30) oberhalb des Silos (12) eine Klappvorrichtung (36) angebracht ist, die vor die Entnahmeöffnung (17) herunterklappbar ist.

2. Vorrichtung nach Anspruch 1, **dadurch gekennzeichnet, dass** die Halte- und Antriebsvorrichtung (28) als Mittel zur Erzeugung des Vortriebs des Rahmens (20) in Silolängsrichtung dient.

3. Vorrichtung nach Anspruch 1 oder 2, **dadurch gekennzeichnet, dass** die Bewegungsmittel (26) und das Silo (12) auf derselben Ebene liegen.

4. Vorrichtung nach einem der vorangehenden Ansprüche, **dadurch gekennzeichnet, dass** die Bewegungsmittel (26) als Rollen oder Räder ausgebildet sind.

5. Vorrichtung nach einem der vorangehenden Ansprüche, **dadurch gekennzeichnet, dass** die Klemmbügel (32) Druckschenkel (33) aufweisen, die den Klemmbügeln (32) in Silolängsrichtung gegenüberliegend angeordnet sind.

6. Vorrichtung nach nach einem der vorangehenden Ansprüche, **dadurch gekennzeichnet, dass** im das Silo (12) umfassenden Bereich der parallelen Schenkel (22) beidseitig eine Spannvorrichtung (34) angebracht ist, die das Silo (12) vertikal und oben umfasst.

7. Vorrichtung nach Anspruch 6, **dadurch gekennzeichnet, dass** die Spannvorrichtung (34) als Seil oder Schlauch ausgebildet ist.

8. Vorrichtung nach einem der vorangehenden Ansprüche, **dadurch gekennzeichnet, dass** an der Unterseite der Klappvorrichtung (36) ein Polster (38) angeordnet ist.

9. Vorrichtung nach einem der vorangehenden Ansprüche, **dadurch gekennzeichnet, dass** die Klappvorrichtung (36) elektrisch oder hydraulisch angetrieben ist.

10. Vorrichtung nach einem der vorangehenden Ansprüche, **dadurch gekennzeichnet, dass** an beiden Schenkeln (22) jeweils mindestens ein Mittel (40) zur Führung der Silofolie (14) angebracht ist und dass ferner beidseitig jeweils ein Mittel (41) zur Faltung der Silofolie (14) zwischen dem Mittel (40) zur Führung der Silofolie (14) und der Rolle (16) angebracht ist.

11. Vorrichtung nach einem der Ansprüche 6 oder 7, **dadurch gekennzeichnet, dass** eine Steuereinheit vorgesehen ist, die mit dem Entnahmemittel (18), der Rolle (16), der Spannvorrichtung (34) und den Klemmbügeln (32) in Wirkverbindung steht.

12. Vorrichtung nach einem der Ansprüche 6, 7 oder 11, **dadurch gekennzeichnet, dass** Sensoren zur Bestimmung der Position des Entnahmemittels und / oder zur Bestimmung der horizontalen und vertikalen Ausdehnung des Bodenlagernden Silos (12) vorgesehen sind und dass eine Regeleinheit vorgesehen ist, die mit den Sensoren, dem Entnahmemittel (18), der Rolle (16), der Spannvorrichtung (34) und den Klemmbügeln (32) in Wirkverbindung steht.

## Claims

1. Device for extracting silage from a ground-storage type silo (12) that is covered with a silage film (14), comprising
a reel (16) for receiving the silage film (14);
extraction means (18) for extracting silage from an extraction opening (17) of the silo (12); with the reel (16) and the extraction means (18) being mounted on a frame (20), said reel (16) being appropriately arranged to ensure that the silage film (14) will extend over the extraction opening (17) and over the extraction means (18), and said frame (20) having a holding and drive device (28) for the reel (16) and being designed to be movable relative to the silo, and said frame (20) being operatively connected to a means for producing an advancing movement in the longitudinal direction of the silo, wherein
the frame (20) has two legs (22) aligned parallel to one another and a strut (24) connecting the two legs (22) to one another, with the two legs (22) partially surrounding the silo (12) in the region of the removal opening (17), and displacement means (26) being provided on the legs (22) and/or on the strut (24) via which the frame (20) makes contact with the ground, wherein the legs (22) have a bracket (30) mounted thereon which surrounds the top part of the silo (12), with clamping brackets (32) being arranged on either side of the bracket (30) that are adapted to be pivoted about the longitudinal axis of the bracket (30), **characterized in that** a flap means (36) is mounted on the bracket (30) above the silo (12), which flap means (36) is adapted to be pivoted down in front of the extraction opening (17).

2. Device according to claim 1, **characterized in that** the holding and drive device (28) serves as a means for producing the advancing movement of the frame (20) in the longitudinal direction of the silo.

3. Device according to claim 1 or 2, **characterized in that** the displacement means (26) and the silo (12) lie on the same plane.

4. Device according to any one of the preceding claims, **characterized in that** the displacement means (26) are designed as rollers or wheels.

5. Device according to any one of the preceding claims, **characterized in that** the clamping brackets (32) have pressure limbs (33) which are arranged opposite the clamping brackets (32) in the longitudinal direction of the silo.

6. Device according to any one of the preceding claims, **characterized in that** a tensioning device (34) is attached on either side of the parallel legs (22) in the area where the latter surround the silo (12), said tensioning device embracing the silo (12) vertically and at the top.

7. Device according to claim 6, **characterized in that** the tensioning device (34) is designed as a rope or a hose.

8. Device according to any one of the preceding claims, **characterized in that** a pad (38) is disposed at the bottom of the flap means (36).

9. Device according to any one of the preceding claims, **characterized in that** the flap means (36) is electrically or hydraulically driven.

10. Device according to any one of the preceding claims, **characterized in that** at least one means (40) for guiding the silage film (14) is mounted on either leg (22) and that furthermore a means (41) for folding the silage film (14) is mounted on either side between the means (40) for guiding the silage film (14) and the reel (16).

11. Device according to one of claims 6 or 7 above, **characterized in that** a control unit is provided which is in operative connection with the extraction means (18), the reel (16), the tensioning device (34) and the clamping brackets (32).

12. Device according to one of claims 6, 7 or 11 above, **characterized in that** sensors are provided for determining the position of the extraction means and/or for determining the horizontal and vertical extent of the ground-storage type silo (12), and that a control unit is provided which is in operative connection with the sensors, the extraction means (18), the reel (16), the tensioning device (34) and the clamping brackets (32).

## Revendications

1. Dispositif de prélèvement de fourrage ensilé d'un silo (12) de stockage au sol, lequel est recouvert d'un film de silo (14), comprenant
un rouleau (16) destiné à recevoir le film de silo (14) ;
un moyen de prélèvement (18) destiné à prélever le fourrage ensilé d'un orifice de prélèvement (17) du silo (12) ;
dans lequel le rouleau (16) et le moyen de prélèvement (18) sont montés sur un cadre (20), dans lequel le rouleau (16) est disposé de sorte que le film de silo (14) s'étend au-dessus de l'orifice de prélèvement (17) et au-dessus du moyen de prélèvement (18), et dans lequel le cadre (20) présente un dispositif d'arrêt et d'entraînement (28) pour le rouleau (16) et est réalisé de manière mobile par rapport au silo, et le cadre (20) est en liaison fonctionnelle avec un moyen pour produire une poussée vers l'avant dans la direction longitudinale du silo, dans lequel
le cadre (20) présente deux branches (22) orientées parallèlement l'une à l'autre ainsi qu'une traverse (24) reliant les deux branches (22) l'une à l'autre, dans lequel les deux branches (22) entourent par endroits le silo (12) dans la zone de l'orifice de prélèvement (17) et dans lequel des moyens de déplacement (26), par l'intermédiaire desquels le cadre (20) est en contact avec le sol, sont montés sur les branches (22) et/ou la traverse (24), dans lequel un étrier (30) entourant le silo (12) en haut est disposé sur les branches (22), dans lequel des étriers de serrage (32), qui peuvent basculer autour de l'axe longitudinal de l'étrier (30), sont disposés des deux côtés sur l'étrier (30), **caractérisé en ce que**
un dispositif de rabattement (36), qui peut être rabattu vers le bas devant l'orifice de prélèvement (17), est monté sur l'étrier (30) au-dessus du silo (12).

2. Dispositif selon la revendication 1, **caractérisé en ce que** le dispositif d'arrêt et d'entraînement (28) sert de moyen pour produire la poussée vers l'avant du cadre (20) dans la direction longitudinale de silo.

3. Dispositif selon la revendication 1 ou 2, **caractérisé en ce que** les moyens de déplacement (26) et le silo (12) se situent sur le même plan.

4. Dispositif selon l'une quelconque des revendications précédentes, **caractérisé en ce que** les moyens de déplacement (26) sont réalisés sous la forme de rouleaux ou roues.

5. Dispositif selon l'une quelconque des revendications précédentes, **caractérisé en ce que** les étriers de serrage (32) présentent des branches de pression (33), qui sont disposées à l'opposé des étriers de serrage (32) dans la direction longitudinale de silo.

6. Dispositif selon l'une quelconque des revendications précédentes, **caractérisé en ce qu'un** dispositif tendeur (34), qui entoure le silo (12) verticalement et en haut, est monté dans la zone, entourant le silo (12), des branches (22) parallèles des deux côtés.

7. Dispositif selon la revendication 6, **caractérisé en ce que** le dispositif tendeur (34) est réalisé sous la forme d'un câble ou tuyau.

8. Dispositif selon l'une quelconque des revendications précédentes, **caractérisé en ce qu'un** rembourrage (38) est disposé sur la face inférieure du dispositif de rabattement (36).

9. Dispositif selon l'une quelconque des revendications précédentes, **caractérisé en ce que** le dispositif de rabattement (36) est entraîné de manière électrique ou hydraulique.

10. Dispositif selon l'une quelconque des revendications précédentes, **caractérisé en ce que** respectivement au moins un moyen (40) destiné à guider le film de silo (14) est monté sur les deux branches (22) et qu'en outre respectivement un moyen (41) destiné à plier le film de silo (14) est monté entre le moyen (40) destiné au guidage du film de silo (14) et le rouleau (16) des deux côtés.

11. Dispositif selon l'une quelconque des revendications 6 ou 7, **caractérisé en ce qu'**une unité de commande est prévue, qui est en liaison fonctionnelle avec le moyen de prélèvement (18), le rouleau (16), le dispositif tendeur (34) et les étriers de serrage (32).

12. Dispositif selon l'une quelconque des revendications 6, 7 ou 11, **caractérisé en ce que** des capteurs destinés à déterminer la position du moyen de prélèvement et/ou à déterminer l'étendue horizontale et verticale du silo (12) de stockage au sol sont prévus et qu'une unité de régulation est prévue, qui est en liaison fonctionnelle avec les capteurs, le moyen de prélèvement (18), le rouleau (16), le dispositif tendeur (34) et les étriers de serrage (32).
